# EUROPEAN PATENT SPECIFICATION

(11) **EP 2 669 099 B1**
(45) Date of publication and mention of the grant of the patent: **02.03.2016**
(21) Application number: 13170140.1
(22) Date of filing: 31.05.2013
(51) Int. Cl.: B60D 1/06, B60R 9/06

(54) **Hitch-ball type carry device**
Kupplungskugel-Tragvorrichtung
Dispositif porteur de boule d'attelage

(30) Priority: 31.05.2012 TW 101119441
(43) Date of publication of application: 04.12.2013
(73) Proprietor: King Rack Industrial Co., Ltd., Taichung City (TW)
(72) Inventor: Wang, Chiu-Kuei, Taichung City (TW)
(74) Representative: Chaillot, Geneviève

(56) References cited:
- WO-A1-2012/053889
- DE-A1-102005 031 505
- US-A1- 2012 043 738

## Description

### FIELD OF THE INVENTION

The present invention relates to a hitch-ball type carry device, and more particularly, to a hitch-ball type carry device for connecting with the hitch ball at rear end of a vehicle.

### BACKGROUND OF THE INVENTION

The hitch ball is connected to the rear end of a vehicle, and the conventional bicycle carry device has a clamp unit which is equal or slightly larger than the hitch ball. The clamp unit has a positioning slot on the bottom thereof and a positioning bar is located on the top of the clamp unit. The clamp unit clamps the hitch ball which is restricted by the clamp unit on the periphery and the top thereof. The positioning slot is engaged with the lower edge of the hitch ball, and the positioning bar presses the hitch ball in the clamp unit.

However, when bicycles are positioned on the bicycle carry device, the user has to simultaneously hold the support frame and operate the positioning bar to position the hitch ball in the clamp unit, so that the operation is not convenient for the users.

The hitch ball reacts a reaction force to the positioning bar when bicycles are positioned on the bicycle carry device, so that the positioning bar can be deformed, or loosened or even damaged, and the hitch ball is separated from the clamp unit to cause dangerous situation on roads.

The present invention intends to provide a hitch-ball type carry device to improve the shortcomings of the conventional carry device.

The document DE 10 2005 031505 A1 discloses a hitch-ball type carry device as defined in the preamble of claim 1.

### SUMMARY OF THE INVENTION

The present invention relates to a hitch-ball type carry device as defined by claim 1.

The primary object of the present invention is to provide a hitch-ball type carry device which is stable and easily operated. The adjustment unit allows the user to adjust the distance between the reception member and the clamp unit.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the hitch-ball type carry device of the present invention;
Fig. 2 is another perspective view to show the hitch-ball type carry device of the present invention;
Fig. 3 is an exploded view to show the hitch-ball type carry device of the present invention;
Fig. 4 shows the first clamping action of the hitch-ball type carry device of the present invention;
Fig. 5 shows the second clamping action of the hitch-ball type carry device of the present invention;
Fig. 6 shows the third clamping action of the hitch-ball type carry device of the present invention;
Fig. 7 shows the fourth clamping action of the hitch-ball type carry device of the present invention;
Fig. 8 shows the fifth clamping action of the hitch-ball type carry device of the present invention;
Fig. 9 is a side cross sectional view of the hitch-ball type carry device of the present invention;
Fig. 10 shows the operation of the adjustment unit of the hitch-ball type carry device of the present invention;
Fig. 11 shows that the hitch-ball type carry device of the present invention is connected to the rear end of a vehicle;

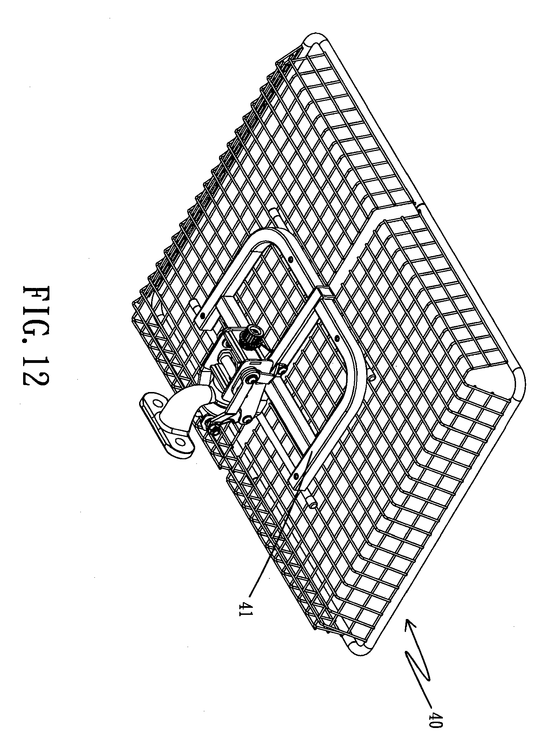

Fig. 12 shows that the support frame of the hitch-ball type carry device of the present invention is replaced with a netted basket, and
Fig. 13 shows that the support frame of the hitch-ball type carry device of the present invention is replaced with a bicycle carry rack.

### DETAILED DESCRIPTION OF THE PREFERRED EMBODIMENT

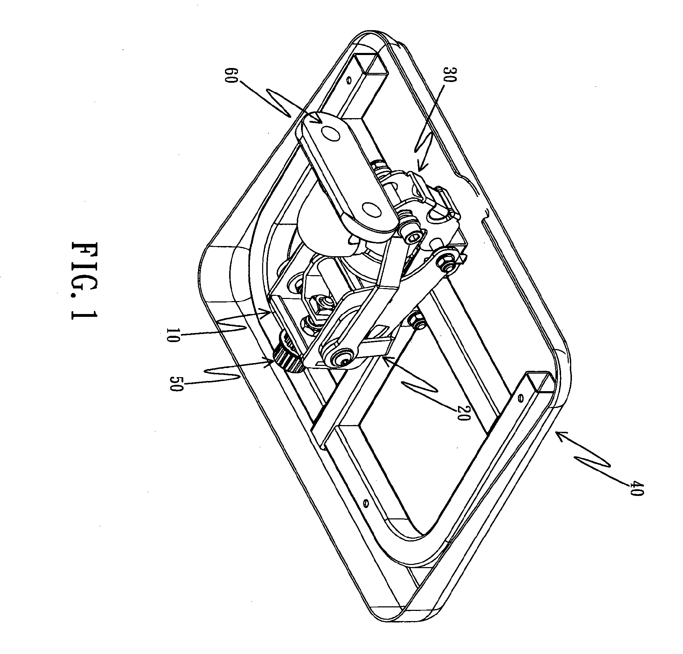

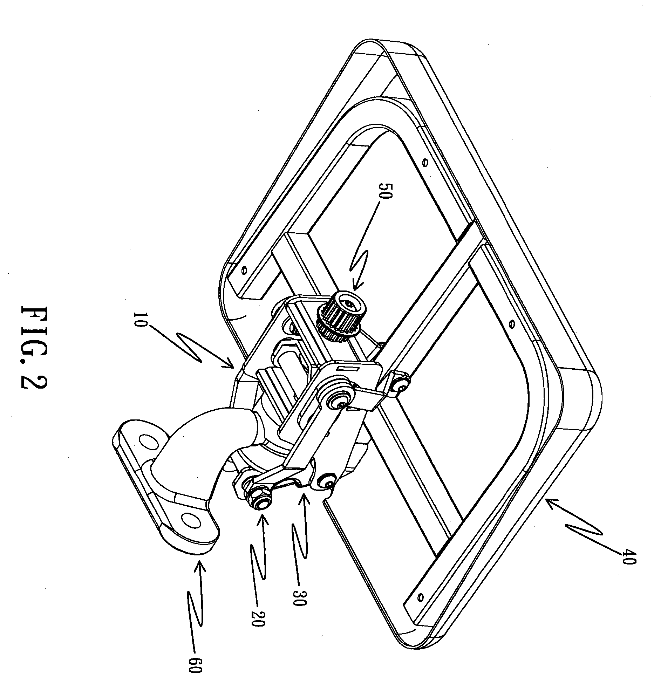

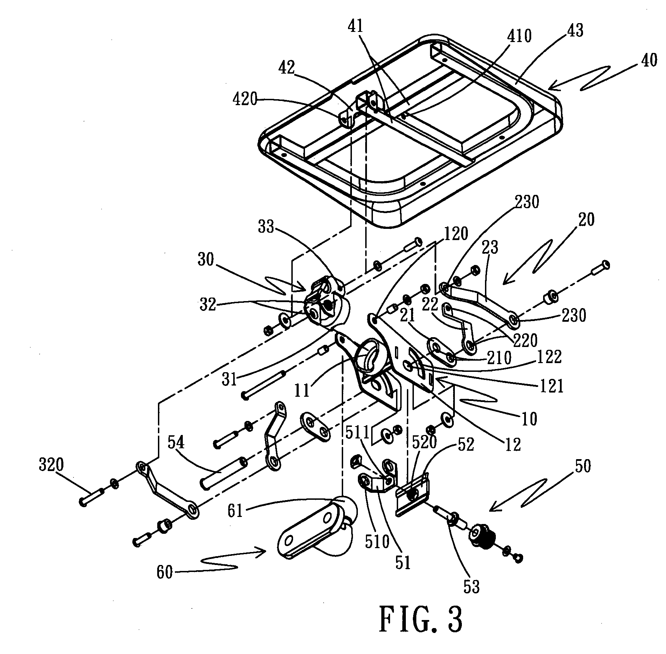

Referring to Figs. 1 to 3, the hitch-ball type carry device of the present invention comprises a base 10 which has a reception member 11 having two side plates 12. Each of the two side plates 12 has a fixing hole 120, an adjustment hole 121 and a curved slot 122 defined therein.

At least two link units 20 each have a fixing plate 21, a first link 22 and a second link 23. Each of the fixing plates 21 has two first holes 210 defined in two ends thereof, each of the first links 22 has two second holes 220 defined in two ends thereof, and each of the second links 23 has two third holes 230 defined in two ends thereof. A pin extends through the overlapped first, second and third holes 210, 220, 230. The at least two link units 20 are connected to two sides of the side plates 12 of the base 10. Another pin extends through the first hole 210 in one of two ends of each of the fixing plates 21 and the adjustment hole 121 of each of the side plates 12. Yet another pin extends through the overlapped first, second and third holes 210, 220, 230 and the curved slot 122 of each of the side plates 12.

A clamp unit 30 has a guiding member 31, two pivotal holes 32 and two through holes 33. A pin 320 extends through the pivotal holes 32 and the third holes 230 of two respective free ends of the second links 23.

A support unit 40 has a bar 41, a positioning part 42 and a support frame 43, wherein the bar 41 has a fixing hole 410. The positioning part 42 has two pivotal holes 420 on two sides thereof and the two pivotal holes 420 are located corresponding to the through hole 33 of the clamp unit 30 and the fixing holes 120 of the base 10. A pin extends through the fixing holes 120, the through holes 33 and the pivotal holes 420. A pin extends through the fixing hole 410 of the bar 41 and the second holes 220 of two respective free ends of the first links 22.

An adjustment unit 50 is connected between the two side plates 12 and has a U-shaped frame 51, a board 52, an adjustment bolt 53 and a tube 54. Two guide holes 510 are defined in two ends of the U-shaped frame 51 and the board 52 has a threaded hole 520. A central hole 511 is defined through the U-shaped frame 51. The adjustment bolt 53 is threadedly connected to the threaded hole 520 and extends through the central hole 511. The tube 54 extends through the first holes 210 of the fixing plates 21 and is connected to the adjustment holes 121 of the two side plates 12.

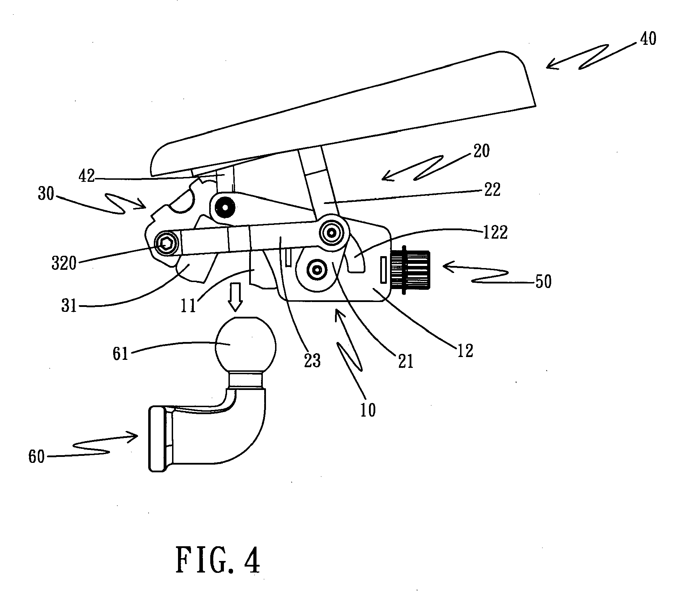

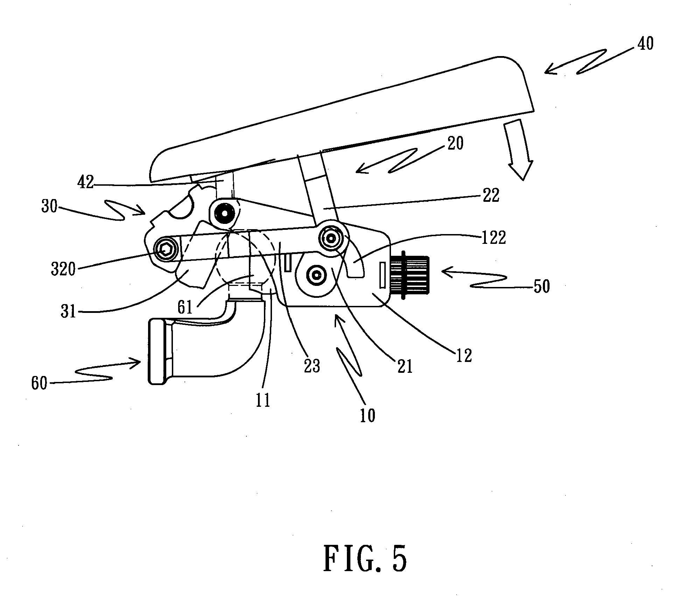

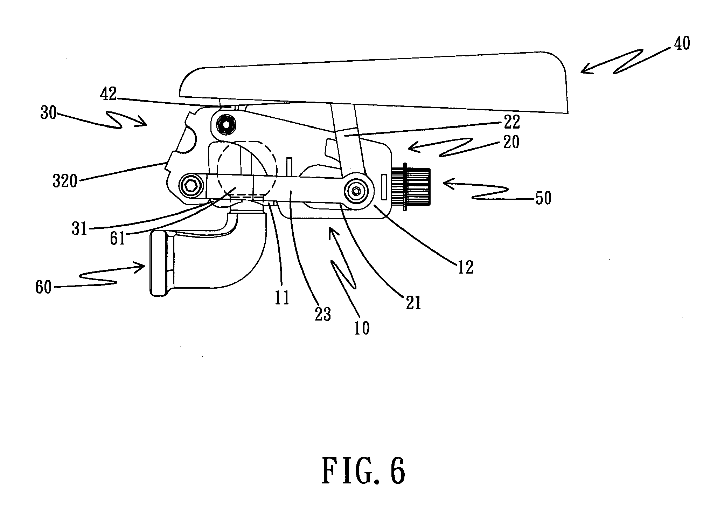

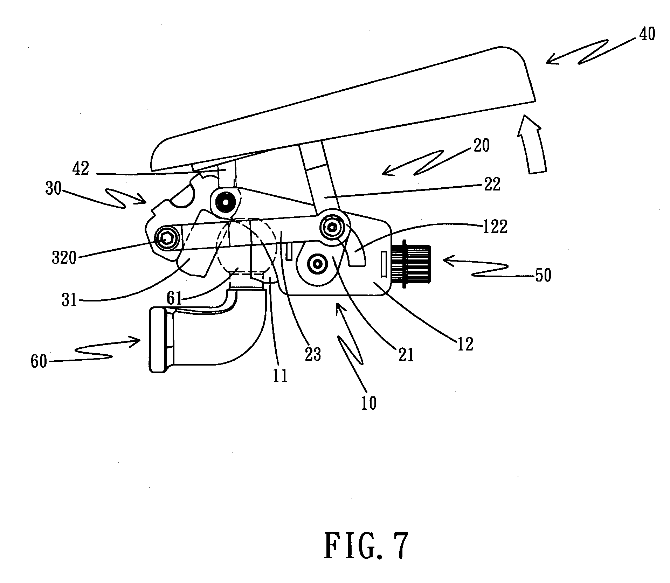

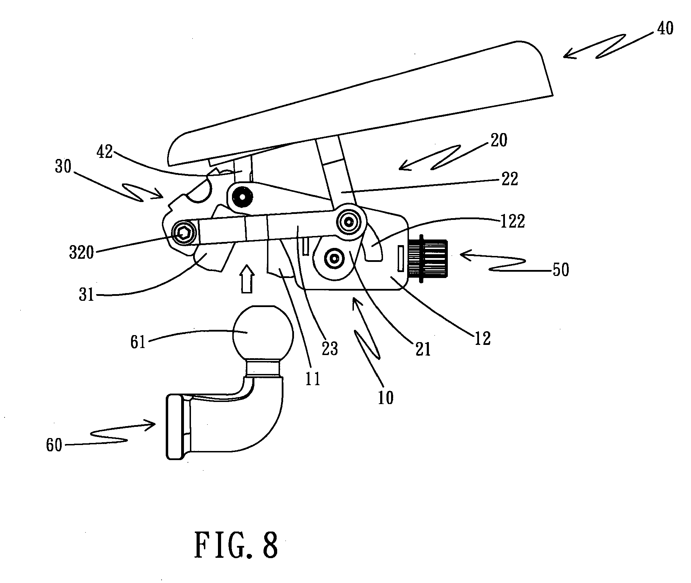

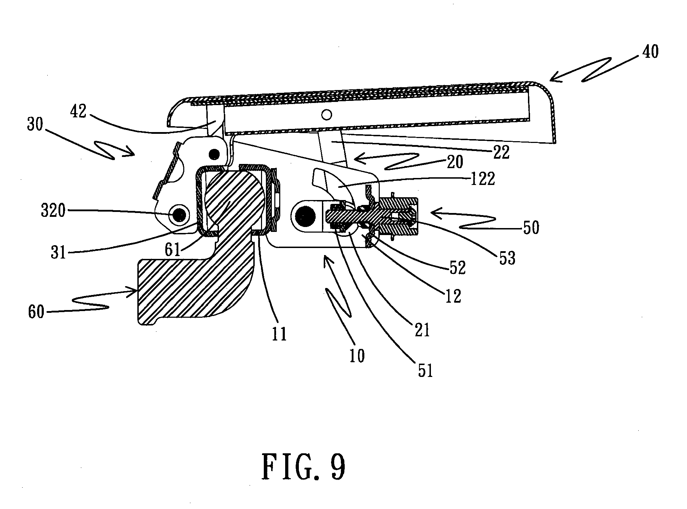

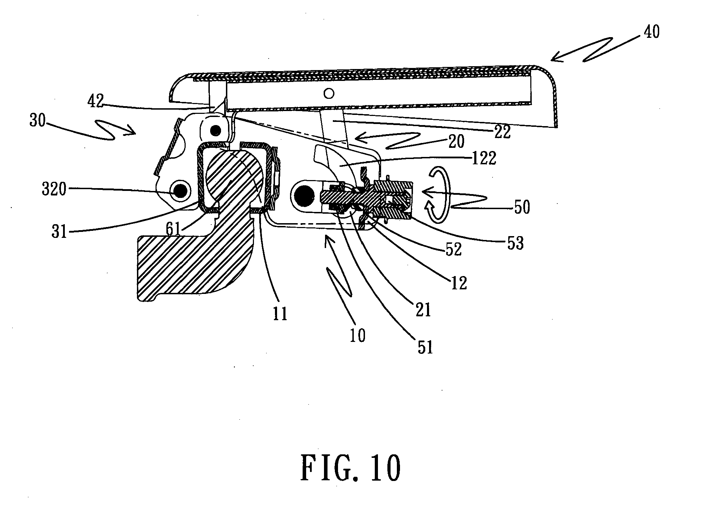

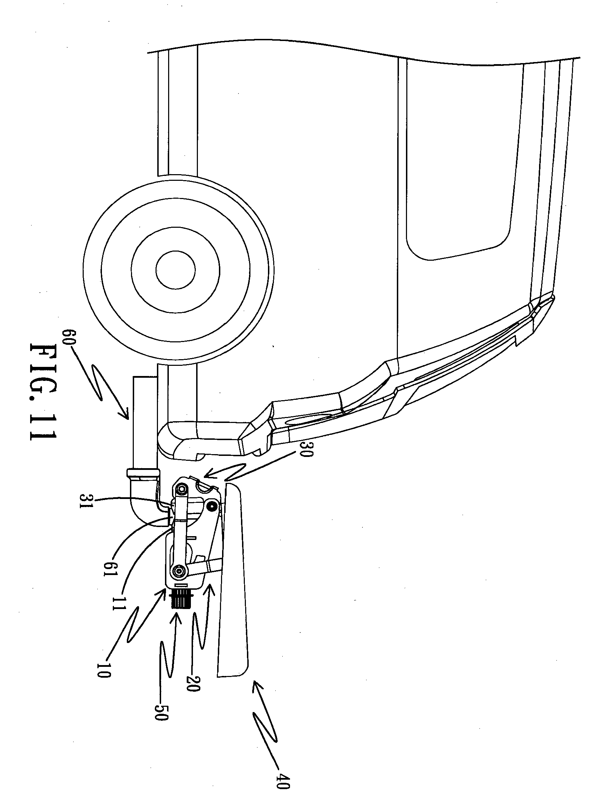

As shown in Figs. 4 to 11, which show the five clamping actions of the present invention, and the support frame 43 is a pedal in this embodiment. The two link units 20 are respectively connected to outsides of the two side plates 12 of the base 10. The pin extends through the first hole 210 in one of two ends of each of the fixing plates 21 and the adjustment hole 121 of each of the side plates 12. Yet another pin extends through the overlapped first, second and third holes 210, 220, 230 and the curved slot 122 of each of the side plates 12. The pin 320 extends through the pivotal holes 32 and the third holes 230 of two respective free ends of the second links 23. The two pivotal holes 420 of the positioning part 42 are located corresponding to the through hole 33 of the clamp unit 30 and the fixing holes 120 of the base 10. The pin extends through the second hole 220 of one end of each of the first link 22s and the fixing hole 410 of the bar 41. The adjustment unit 50 is connected between the two side plates 12 and has a U-shaped frame 51 which has the guide holes 510 which are located corresponding to the adjustment holes 121 of the side plates 12. The tube 54 pivotably connects the fixing plates 21, the first links 22 and the second links 23. The reception member 11 of the base 10 is opened and is mounted to the hitch ball 61. When the support frame 43 is pivoted downward, the first links 22 of the link units 20 connected with the bar 41 move the fixing plates 21 and the second links 23 to be moved along the curved slots 122 of the side plates 12 of the base 10. The clamp unit 30 is pushed by the second links 23 and pivoted toward the reception member 11 to clamp the hitch ball 61 of the hitch unit 60. When support frame 43 is pivoted upward, the clamp unit 30 is pivoted away from the reception member 11 to release the hitch ball 61. It is convenient for the users to pivot the support frame 43 to clamp or release the hitch ball 61.

The U-shaped frame 51 is moved by operating the adjustment bolt 53, the tube 54 drives the fixing plates 21 to move in the adjustment holes 121 of the side plates 12, so that the distance between the guide member 31 of the clamp unit 30 and the reception member 11 of the base 10 is adjustable. By this way, the present invention can be used to different sizes of the hitch ball 61.

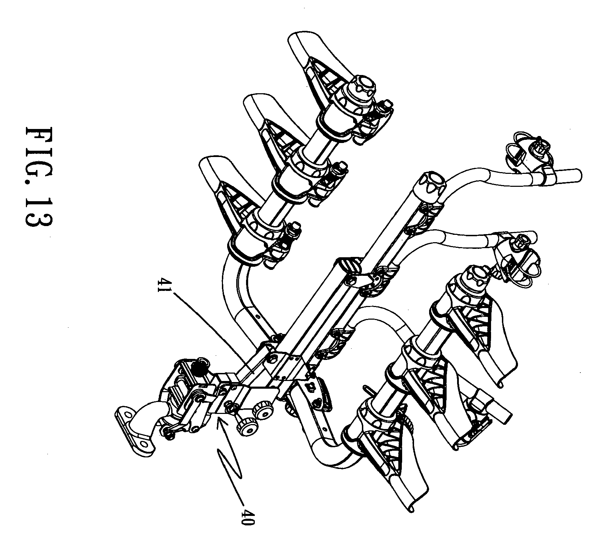

Referring to Figs. 13 to 14, the support frame 43 of the support unit 40 can be a netted basket or a bicycle carry rack.

It is convenient for the users to pivot the support frame 43 downward to move the fixing plates 21 and the second links 23 along the curved slots 122 of the side plates 12 of the base 10 so that the clamp unit 30 is pushed by the second links 23 and pivoted toward the reception member 11 to clamp the hitch ball 61 of the hitch unit 60.

The distance between the guide member 31 of the clamp unit 30 and the reception member 11 of the base 10 can be adjustable to allow the present invention to be used to different sizes of the hitch ball 61.

## Claims

1. A hitch-ball type carry device comprising:
a base (10) having a reception member (11) which has two side plates (12), a fixing hole (120) defined in each of the two side plates (12);
a clamp unit (30) having a guiding member (31) and two through holes (33);
a support unit (40) having a bar (41), a positioning part (42) and a support frame (43), the positioning part (42) and the clamp unit (30) connected to the base (10), the positioning part (42) having two pivotal holes (420) on two sides thereof and the two pivotal holes (420) are located corresponding to the through holes (33) of the clamp unit (30) and the fixing holes (120) of the base (10), a pin (320) extending through the fixing holes (120), the through holes (33) and the pivotal holes (420), and
the clamp unit (30) and the reception member (11) adapted to be separated from or mounted to a hitch ball by pivoting the support frame (43) to operate at least one link unit connected to the base (10),
**characterized by** the fact that the base (10) further has an adjustment hole (121) and a curved slot (122) defined therein;
the device further comprises at least two link units (20) and each link unit having a fixing plate (21), a first link (22) and a second link (23), each of the fixing plates (21) having two first holes (210) defined in two ends thereof, each of the first links (22) having two second holes (220) defined in two ends thereof, each of the second links (23) having two third holes (230) defined in two ends thereof, a pin (320) extending through the overlapped first, second and third holes (210) (220) (230), the at least two link units (20) connected to two sides of the side plates (12) of the base (10), another pin extending through the first hole (210) in one of two ends of each of the fixing plates (21) and the adjustment hole (121) of each of the side plates (12), yet another pin extending through the overlapped first, second and third holes (210) (220) (230) and the curved slot (122) of each of the side plates (12);
the clamp unit (30) further has two pivotal holes (32) a pin (320) extending through the pivotal holes (32) and the third holes (230) of two respective free ends of the second links (23), and
a pin extending through the fixing hole (410) of the bar (41) and the second holes (220) of two respective free ends of the first links (22).

2. The device as claimed in claim 1, wherein an adjustment unit (50) is connected between the two side plates (12) and has a U-shaped frame (51), a board (52) and an adjustment bolt (53), two guide holes (510) are defined in two ends of the U-shaped frame (51) and the board (52) has a threaded hole (520), a central hole (511) is defined through the U-shaped frame (51), the adjustment bolt (53) is threadedly connected to the threaded hole (520) and extends through the central hole (511), the pin (320) extending through the first, second and third holes (210) (220) (230) of the fixing plate (21), the first link (22) and the second link (23) extends through the guide holes (510) of the U-shaped frame (51) and the adjustment holes (121) of the side plates (12).

3. The device as claimed in claim 1, wherein the support frame (43) of the support unit (40) is a pedal.

4. The device as claimed in claim 1, wherein the support frame (43) of the support unit (40) is a netted basket.

5. The device as claimed in claim 1, wherein the support frame (43) of the support unit (40) is a bicycle carry rack.

## Patentansprüche

1. Kupplungskugel-Tragvorrichtung, umfassend:
ein Unterteil (10) mit einem Aufnahmeglied (11), das zwei Seitenplatten (12) aufweist, wobei ein Befestigungsloch (120) in jeder der beiden Seitenplatten (12) definiert ist;
eine Spanneinheit (30) mit einem Führungselement (31) und zwei durchgehenden Löchern (33);
eine Trägereinheit (40) mit einer Stange (41), einem Positionierteil (42) und einem Trägerrahmen (43), wobei das Positionierteil (42) and die Spanneinheit (30) mit dem Unterteil (10) verbunden sind, das Positionierteil (42) zwei als Drehpunkt dienende Löcher (420) auf zwei Seiten davon aufweist und die beiden als Drehpunkt dienenden Löcher (420) entsprechend den durchgehenden Löchern (33) der Spanneinheit (30) und den Befestigungslöchern (120) des Unterteils (10) angeordnet sind, ein Stift (320) durch die Befestigungslöcher (120), die durchgehenden Löcher (33) und die als Drehpunkt dienenden Löcher (420) verläuft, and
die Spanneinheit (30) und das Aufnahmeglied (11) so ausgelegt sind, dass sie von einer Kupplungskugel getrennt oder daran montiert werden, indem der Trägerrahmen (43) so geschwenkt wird, dass mindestens eine Verbindungseinheit betätigt wird, die mit dem Unterteil (10) verbunden ist,
**dadurch gekennzeichnet, dass** das Unterteil (10) ferner ein Einstellloch (121) und einen gekrümmten Schlitz (122) aufweist, die darin definiert sind;
die Vorrichtung ferner mindestens zwei Verbindungseinheiten (20) umfasst und jede Verbindungseinheit eine Befestigungsplatte (21), ein erstes Verbindungselement (22) und ein zweites Verbindungselement (23) aufweist, jede der Befestigungsplatten (21) zwei erste Löcher (210) aufweist, die in zwei Enden davon definiert sind, jedes der ersten Verbindungselemente (22) zwei zweite Löcher (220) aufweist, die in zwei Enden davon definiert sind, jedes der zweiten Verbindungselemente (23) zwei dritte Löcher (230) aufweist, die in zwei Enden davon definiert sind, ein Stift (320) durch die sich überdeckenden Löcher, das erste, zweite und dritte Loch (210) (220) (230), verläuft, die mindestens zwei Verbindungseinheiten (20) mit zwei Seiten der Seitenplatten (12) des Unterteils (10) verbunden sind, ein weiterer Stift durch das erste Loch (210) in einem der zwei Enden von jeder der Befestigungsplatten (21) und das Einstellloch (121) von jeder der Seitenplatten (12) verläuft, noch ein weiterer Stift durch die sich überdeckenden Löcher, das erste, zweite und dritte Loch (210) (220) (230), und den gekrümmten Schlitz (122) von jeder der Seitenplatten (12) verläuft;
die Spanneinheit (30) ferner zwei als Drehpunkt dienende Löcher (32) aufweist, ein Stift (320) durch die als Drehpunkt dienenden Löcher (32) und die dritten Löcher (230) von zwei jeweiligen freien Enden der zweiten Verbindungselemente (23) verläuft, und
ein Stift durch das Befestigungsloch (410) der Stange (41) und die zweiten Löcher (220) von zwei jeweiligen freien Enden der ersten Verbindungselemente (22) verläuft.

2. Vorrichtung nach Anspruch 1, wobei eine Einstelleinheit (50) mit den zwei Seitenplatten (12) dazwischenliegend verbunden ist und einen U-förmigen Rahmen (51), eine Platte (52) und eine Einstellschraube (53) aufweist, zwei Führungslöcher (510) in zwei Enden des U-förmigen Rahmens (51) definiert sind und die Platte (52) eine Gewindebohrung (520) aufweist, ein mittiges Loch (511) durch den U-förmigen Rahmen (51) hindurch definiert ist, die Einstellschraube (53) verschraubt mit der Gewindebohrung (520) verbunden ist und durch das mittige Loch (511) verläuft, der Stift (320), der durch das erste, zweite und dritte Loch (210) (220) (230) der Befestigungsplatte (21), des ersten Verbindungselements (22) und des zweiten Verbindungselements (23) verläuft, durch die Führungslöcher (510) des U-förmigen Rahmens (51) und die Einstelllöcher (121) der Seitenplatten (12) verläuft.

3. Vorrichtung nach Anspruch 1, wobei der Trägerrahmen (43) der Trägereinheit (40) ein Pedal ist.

4. Vorrichtung nach Anspruch 1, wobei der Trägerrahmen (43) der Trägereinheit (40) ein Netzkorb ist.

5. Vorrichtung nach Anspruch 1, wobei der Trägerrahmen (43) der Trägereinheit (40) ein Fahrradträger ist.

## Revendications

1. Dispositif de transport de type boule d'attelage comprenant :
une base (10) ayant un élément de réception (11) qui a deux plaques latérales (12), un trou de fixation (120) défini dans chacune des deux plaques latérales (12) ;
une unité de serrage (30) ayant un élément de guidage (31) et deux trous traversant (33) ;
une unité de support (40) ayant une barre (41), une partie de positionnement (42) et un cadre de support (43), la partie de positionnement (42) et l'unité de serrage (30) étant reliées à la base (10), la partie de positionnement (42) ayant deux trous de pivotement (420) sur deux côtés de celle-ci et les deux trous de pivotement (420) étant situés de façon correspondante aux trous traversant (33) de l'unité de serrage (30) et aux trous de fixation (120) de la base (10), un axe (320) s'étendant à travers les trous de fixation (120), les trous traversant (33) et les trous de pivotement (420), et
l'unité de serrage (30) et l'élément de réception (11) étant agencés pour être séparés de et montés sur une boule d'attelage par pivotement du cadre de support (43) pour actionner au moins une unité de liaison reliée à la base (10),
**caractérisé par le fait que** la base (10) a en outre un trou d'ajustement (121) et une fente incurvée (122) définis dans celle-ci ;
le dispositif comprend en outre au moins deux unités de liaison (20) et chaque unité de liaison ayant une plaque de fixation (21), une première liaison (22) et une seconde liaison (23), chacune des plaques de fixation (21) ayant deux premiers trous (210) définis dans deux extrémités de celle-ci, chacune des premières liaisons (22) ayant deux deuxièmes trous (220) définis dans deux extrémités de celle-ci, chacune des secondes liaisons (23) ayant deux troisièmes trous (230) définis dans deux extrémités de celle-ci, un axe (320) s'étendant à travers les premiers, deuxièmes et troisièmes trous superposés (210) (220) (230), les au moins deux unités de liaison (20) étant reliées à deux côtés des plaques latérales (12) de la base (10), un autre axe s'étendant à travers le premier trou (210) dans l'une des deux extrémités de chacune des plaques de fixation (21) et le trou d'ajustement (121) de chacune des plaques latérales (12), encore un autre axe s'étendant à travers les premiers, deuxièmes et troisièmes trous superposés (210) (220) (230) et la fente incurvée (122) de chacune des plaques latérales (12) ;
l'unité de serrage (30) a en outre deux trous de pivotement (32), un axe (320) s'étendant à travers les trous de pivotement (32) et les troisièmes trous (230) de deux extrémités libres respectives des secondes liaisons (23), et
un axe s'étendant à travers le trou de fixation (410) de la barre (41) et les deuxièmes trous (220) de deux extrémités libres respectives des premières liaisons (22).

2. Dispositif selon la revendication 1, dans lequel une unité d'ajustement (50) est reliée entre les deux plaques latérales (12) et a un cadre en forme de U (51), une plaquette (52) et un boulon d'ajustement (53), deux trous de guidage (510) sont définis dans deux extrémités du cadre en forme de U (51) et la plaquette (52) a un trou fileté (520), un trou central (511) est défini à travers le cadre en forme de U (51), le boulon d'ajustement (53) est relié par vissage au trou fileté (520) et s'étend à travers le trou central (511), l'axe (320) s'étendant à travers les premiers, deuxièmes et troisièmes trous (210) (220) (230) de la plaque de fixation (21), de la première liaison (22) et de la seconde liaison (23) s'étend à travers les trous de guidage (510) du cadre en forme de U (51) et les trous d'ajustement (121) des plaques latérales (12).

3. Dispositif selon la revendication 1, dans lequel le cadre de support (43) de l'unité de support (40) est une pédale.

4. Dispositif selon la revendication 1, dans lequel le cadre de support (43) de l'unité de support (40) est un panier grillagé.

5. Dispositif selon la revendication 1, dans lequel le cadre de support (43) de l'unité de support (40) est un porte-bicyclette.
